# EUROPEAN PATENT APPLICATION

(11) **EP 0 653 395 A1**
(43) Date of publication of application: **17.05.1995**
(21) Application number: 94916412.3
(22) Date of filing: 30.05.1994
(51) Int. Cl.: C04B 41/91

(54) **CERAMIC SINTERED BODY AND METHOD OF PROCESSING SURFACE OF BODY**

(30) Priority: 01.06.1993 JP 130820/93
(71) Applicant: SUMITOMO ELECTRIC INDUSTRIES, LTD., Osaka-shi, Osaka 541 (JP)
(72) Inventor: MURABE, Kaoru, Itami Works of Sumitomo, Itami-shi, Hyogo 664 (JP); NISHIOKA, Takao, Itami Works of Sumitomo, Itami-shi, Hyogo 664 (JP); YAMAKAWA, Akira, Itami Works of Sumitomo, Itami-shi, Hyogo 664 (JP); YAMAGATA, Shin-ichi, Itami Works of Sumitomo, Itami-shi, Hyogo 664 (JP)
(74) Representative: Kirschner, Klaus Dieter, Dipl.-Phys.
(86) International application number: JP9400856
(87) International publication number: WO9427930

(57) **Abstract**

There is disclosed a ceramic sintered body which is almost free from surface damages and has a practically high reliability as a machine part. A laser beam having a wavelength in a region of ultraviolet rays is applied to a surface in a predetermined area of the ceramic sintered body to remove a surface layer in the predetermined area.

## Description

### Technical Field

The present invention relates to a ceramics sintered body and a surface working method therefor.

### Background

Fine ceramics, having characteristics of high hardness and high strength, is now being applied to a wear resistant part, a sliding part or the like. Roughness and fine cracks exist in a surface of ceramics after sintering, i.e., a sintered surface. When these defects are left intact, the ceramics sintered body is broken from these defects serving as starting points, and exhibits extremely brittle behavior. In order to apply a ceramics sintered body to an actual mechanical part or the like, therefore, it is necessary to remove potential defects which are contained in a surface layer of the ceramics sintered body, thereby improving surface strength.

In general, grinding with a diamond grindstone or the like is employed as a method of removing a surface layer of a ceramics sintered body. When the surface layer of the ceramics sintered body is removed by grinding, however, an alteration layer may be formed, chipping and scratches may be introduced, and residual stress may be introduced in the surface layer after working. These defects serve as factors deteriorating surface strength of the ceramics sintered body. With respect to a hard and fragile ceramics sintered body, grinding is so difficult that the degrees of freedom in the working shape and the conditions for performing working are extremely lowered. In particular, fine working is difficult with respect to a ceramics sintered body. In such fine working, damage of working portions is easily caused by chipping or the like in particular, and reduction of reliability with respect to the part life such as resulting damage caused during employment comes into question.

It is possible to recover damage portions or defective parts existing in the surface of the ceramics sintered body after working. However, macro defects influencing on reliability of the member are not sufficiently recovered although defects are recovered at fine levels, and hence this means is insufficient for obtaining a member sufficiently effectuating excellent strength and characteristics originally provided in the ceramics.

An object of the present invention is to provide a surface working method for a ceramics sintered body which can suppress occurrence of surface damage portions to the minimum.

Another object of the present invention is to provide a ceramics sintered body having high reliability as a mechanical part in practice, with small surface damage portions after working.

### Disclosure of the Invention

In the surface working method for a ceramics sintered body according to the present invention, a laser beam having a wavelength of an ultraviolet region is applied to a surface of a prescribed region of the ceramics sintered body, thereby removing the surface layer of the prescribed region.

A laser having a laser medium of excited dimers such as ArF, KrF or XeCl is preferably employed as the laser having a wavelength of an ultraviolet region.

Preferably, the thickness of the surface layer as removed is at least 2 µm. Further, the laser beam or the ceramics sintered body is continuously or intermittently moved so that the laser beam is applied to the overall surface of the prescribed region. In order to maintain the distance between an objective lens of an oscillator oscillating the laser beam having a wavelength of an ultraviolet region and a worked surface of the ceramics sintered body constant, further, it is preferable to adjust the distance between the objective lens and the ceramics sintered body during working.

In another embodiment of the surface working method for a ceramics sintered body according to the present invention, rough working is performed on a prescribed region of the ceramics sintered body and thereafter a laser beam having a wavelength of an ultraviolet region is applied to the surface of the roughly worked prescribed region as finish working, thereby removing the surface layer of the prescribed region.

According to the aforementioned method, working efficiency is improved. Mechanical grinding, or working with a laser beam having a wavelength of an infrared region is typically employed as the rough working.

Preferably, the thickness of the surface layer which is removed by the laser beam having a wavelength of an ultraviolet region is at least 2 µm.

In the ceramics sintered body according to the present invention, the surface layer of the prescribed region is removed by irradiation with the laser beam having a wavelength of an ultraviolet region.

The surface of the prescribed region contains no melted coagulum of ceramics. Preferably, surface roughness of the surface of the prescribed region after removal of the surface layer is not more than 5 µm in center line average height Ra of JIS B0601. Further, three-point bending strength in accordance with JIS R1601 of the ceramics sintered body having this surface is at least 1000 MPa. The material for the prescribed region is a silicon nitride based sintered body, for example.

The feature of the present invention according to one aspect resides in that the laser beam having a wavelength of an ultraviolet region is applied to the surface of the prescribed region of the ceramics sintered body, thereby removing the surface layer of the prescribed region. The feature of the present invention according to another aspect resides in that rough working is first performed on the prescribed region of the ceramics sintered body and thereafter the laser beam having a wavelength of an ultraviolet region is applied to the surface of the roughly worked prescribed region as finish working thereby removing the surface layer of the prescribed region, in order to improve working efficiency.

When surface working is performed on a ceramics sintered body by grinding with a diamond grindstone as in the prior art, occurrence of heat damage and fine cracks etc. of the surface layer, which are factors reducing strength of the sintered body, is recognized on the surface of the sintered body. Such defects are easily caused particularly in melt bonding type ceramics such as silicon nitride. On the other hand, it is conceivable that no occurrence of the aforementioned detects is recognized when surface working of the ceramics sintered body is performed by application of a laser beam capable of noncontact working, and it is possible to effectuate original strength of the material as the result.

Laser oscillators serving as working beam sources which are industrially employed at present are roughly classified into those oscillating beams of infrared regions and those oscillating beams of ultraviolet regions. A laser beam can concentrate high energy in a small region, and hence an irradiated portion is melted or evaporated when the laser beam is applied to a workpiece. It is known that this phenomenon can be applied to removal of a material by controlling the laser beam. In relation to a metal material, cutting, welding, alloying, cladding, surface melting/solidifying treatment, homogeneous solution treatment and the like are performed through a laser beam.

In general, plane removal working is performed by mainly applying a beam of an infrared region in relation to a ceramics material. For example, Collection by Japan Society of Mechanical Engineers (Part C), Vol. 57, No. 537 (May 1991) describes that a Weibull factor indicating reliability of a material with respect to breaking is improved by working with a YAG laser having a wavelength of an infrared region. Due to influence by a surface melted/alteration layer, however, reduction in strength comes into question as compared with an abrasive. Further, surface roughness, which is about 3 µmRz, is rough as compared with surface roughness of 1 µmRz obtained by ordinary grind finishing. If a material which is worked with a YAG laser is applied as such to a machine part, particularly to a part requiring a sliding portion, therefore, a possibility of damaging the counter material is increased. Further, the surface roughness provides a notch effect to the member as the case may be, and hence it is necessary to reduce the surface roughness of a working surface in order to ensure reliability of the member.

The reason why the surface roughness is increased after removal working with infrared light such as a YAG laser is considered as follows: When a surface of a workpiece is heated to a high temperature by irradiation with a laser beam, the material is melted and removed, while pulsation of the melt remains as a form since a liquid phase is formed at this time, to conceivably appear in the surface roughness. The working with infrared light has such a problem, while the same contributes to improvement in working efficiency. Namely, the working with infrared light has high working efficiency and a material removal rate per unit time is increased since the working is further progressed with the as-formed liquid phase serving as a heat source.

In the working method of irradiating the prescribed region of the ceramics sintered body with the laser having a wavelength of an ultraviolet region, no occurrence of working defects resulting from grinding is recognized while no occurrence of a heat-affected layer caused by the infrared laser is recognized. Thus, it is possible to reduce the surface roughness after working.

Irradiation energy of the laser beam having a wavelength of an ultraviolet region is larger as compared with the laser beam of an infrared region wavelength such as the YAG laser. Therefore, it is conceivable that large irradiation energy directly acts on bond species of the substance when the laser beam having a wavelength of an ultraviolet region is applied to the surface of a workpiece, to sublimate, decompose and remove the substance. Thus, it is conceivable that no melt is formed by irradiation with the laser beam of an ultraviolet region wavelength and hence no surface roughness is caused by the melt. Further, removal of the substance progresses through a non-thermal process, whereby no heat affected layer resulting from a residual melt in working is formed dissimilarly to the working with infrared light, and the surface layer has a composition which is substantially similar to that of the base material. Thus, no reduction of mechanical properties such as material strength, for example, resulting from the working surface is caused if the surface working is performed with the laser beam having a wavelength of an ultraviolet region. On the other hand, the working with the laser beam of an ultraviolet region wavelength requires energy for acting on the bond species of the substance, and hence working efficiency is reduced as compared with working through a thermal conduction process such as infrared light.

The ceramics to which the present invention is applied is not restricted to silicon nitride, but the present invention is applicable to all ceramics such as alumina, silicon carbide, boron carbide, zirconia, aluminum nitride and the like. Working conditions are properly varied with the material as applied.

A laser beam having a wavelength of an ultraviolet region is generally pulse-oscillated. In general, it is known that boring or grooving is performed by bringing such a laser beam having a wavelength of an ultraviolet region into a beam of a necessary shape through a mask and concentrically applying this beam to a surface of a workpiece. For example, a magazine "New Ceramics" (1993) No. 1 discloses in pp. 79 to 81 grooving of alumina and silicon nitride with an excimer laser. It is conceivable that irregularity is caused in a working surface when boring or grooving is performed with a laser beam having a wavelength of an ultraviolet region, to deteriorate mechanical properties of the surface.

According to the present invention, the laser beam or the ceramics sintered body is continuously or intermittently moved with application of the laser beam so that the laser beam which is condensed in a linear or rectangular shape is applied to the overall surface of the prescribed region of the ceramics sintered body. Finally, only the surface layer of the prescribed region irradiated with the laser beam is removed.

When the workpiece is continuously or intermittently rotated about a rotation axis while the workpiece or the beam is simultaneously moved perpendicularly to the rotation axis at the same time, it is possible to form a curved surface or an inclined surface. Irradiation of the beam can be three-dimensionally performed, whereby working of the interior of a cylinder, for example, is enabled, working of outer and inner surfaces is enabled with a single unit, and a merit in cost is also increased.

In order to maintain the distance between the objective lens of the laser oscillator oscillating the laser beam and the worked surface of the ceramics sintered body constant in beam working, it is preferable to adjust the distance between the objective lens and the ceramics sintered body during the working. The reason for this resides in that there is a possibility that no prescribed shape may be obtained due to change of a material removal rate, since a focal distance which is set on an initial irradiated surface is varied with respect to removal working in a depth direction following progress of the working and energy density at an irradiated portion is changed as the result.

When the surface layer is removed by the laser beam having a wavelength of an ultraviolet region, the surface of the ceramics sintered body after removal is smoothed with small irregularity. The thickness of the surface layer as removed is preferably at least 2 µm. If this thickness is less than 2 µm, it is impossible to completely remove defects before the surface working such as open pores, impurities and fine cracks which are introduced in the process of preparing the ceramics sintered body. The upper limit of the thickness of the removed surface layer is restricted from a practical point of view.

There are a CO₂ laser and an Nd-YAG laser as laser beams having wavelengths of infrared regions. The wavelength of the CO₂ laser is 10.6 µm, and that of the Nd-YAG laser is 1.06 µm. As compared with the wavelengths of these laser beams, the wavelength of a KrF excimer laser, which is an exemplary laser beam having a wavelength of an ultraviolet region, is 248 nm and considerably short. In general, it is said that a limit focal diameter is about the wavelength. It is conceivable that the beam diameter exerts remarkable influence on working accuracy since laser beam machining is adapted to apply working energy to the workpiece by the beam. Also in this point, it is understood that an extremely smooth working surface can be readily obtained in high accuracy by performing surface working with the laser beam having a wavelength of an ultraviolet region. In order to practically obtain a ceramics sintered body having high reliability, it is desirable to perform surface working so that surface roughness (center line average height Ra of JIS B0601) is not more than 0.3 µm, preferably with a laser beam having a wavelength of an ultraviolet region.

Working of high accuracy and high reliability is enabled by carrying out surface removal working of the ceramics sintered body by employing the laser beam having a wavelength of an ultraviolet region, while there is such a problem that working efficiency is reduced. In order to solve this problem, the working with ultraviolet light is regarded as finish working in one aspect of the present invention, and working with a laser beam having a wavelength of an infrared region, or mechanical grinding is employed as rough working. According to this method, irregularity of a working surface caused by irradiation with an infrared light laser is removed by irradiation with an ultraviolet light laser which is finish working, for example. The rough working is carried out through working having high removal efficiency and the ultraviolet light laser is employed only for the finish working which is reduced in removal efficiency, whereby working having high efficiency and high reliability is enabled in view of the overall process.

When a working surface which is surface-worked with a laser beam having a wavelength of an ultraviolet region is employed as a machine part to which a load is applied, it is preferable to set three-point bending test strength in accordance with JIS R1601 of this working surface to be at least 1000 MPa. With such strength, it can sufficiently withstand employment as a machine part.

When grinding is performed as surface working of a ceramics sintered body as in the prior art, it is necessary to perform lapping in order to remove defects such as cracks introduced in grinding and falling of particles. In the surface working method according to the present invention employing the laser beam having a wavelength of an ultraviolet region for at least finish working, on the other hand, it is not necessary to perform lapping since defects such as cracks and falling of particles are suppressed in working. Further, the inventive method can be readily executed also for a portion which is hard to grind by grinding employing a grindstone, and its industrial value is extremely high.

The ceramics sintered body obtained according to the present invention is not broken even if the same is loaded with extremely large stress, and can be advantageously applied to a machine part to which high reliability is required. There is a valve for an internal combustion engine, a piston ring or a piston pin, for example, as such a machine part. While a number of broken parts are caused when a stem portion of a valve for an internal combustion engine is ground, for example, it is possible to obtain a ceramics valve having high strength and high reliability with no breaking according to the inventive surface working method.

### Brief Description of the Drawings

Fig. 1 is a perspective view showing an exemplary surface working method according to the present invention.

Fig. 2 is a perspective view showing another exemplary surface working method according to the present invention.

Fig. 3 is an illustrative sectional view showing a worked portion in Fig. 2 in an enlarged manner.

### Best Mode for Carrying Out the Invention

### Example 1

Powder containing Y₂O₃ and Al₂O₃ by 10% in total on a weight basis as a sintering assistant with a rest of silicon nitride was employed and a compact of the silicon nitride powder was sintered in a gaseous nitrogen atmosphere of 1 atm. at 1800°C, to obtain a silicon nitride sintered body. TRS test pieces (3 mm x 4 mm x 40 mm) were prepared from this silicon nitride sintered body in accordance with JIS R1601. Surface working was executed on these test pieces by different methods. The work number for a single working method was set at 15.

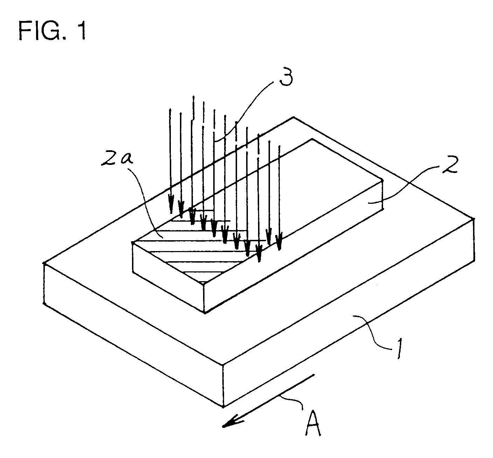

A surface working method as the inventive example was performed in the following manner: First, an excimer laser of 248 nm in wavelength using KrF gas was employed as a laser medium. As shown in Fig. 1, each test piece 2 was placed on a work table 1, and a linearly condensed beam was applied to a working surface 2a of the test piece 2. At this time, the work table 1 was moved in a direction shown by arrow A, so that the beam 3 was applied to the overall working surface 2a of the test piece 2. Thus, a surface layer of the working surface 2a of the test piece 2 was removed. The thickness of the surface layer as removed was 10 µm.

As a method of comparative example, the surface of each test piece was ground with a diamond grindstone of #200.

As a method of another comparative example, a surface layer of each test piece was removed with an Nd-YAG laser (1.06 µm in wavelength) in a thickness of 10 µm.

Three-point bending strength values in accordance with JIS R1601, Weibull factors and center line average height values (Ra) of JIS B0601 were measured with respect to the test pieces which were subjected to different surface working methods as described above. Measured values in longitudinal directions of the test pieces were employed as the surface roughness values. The results are shown in Table 1.

**Table 1**

| | Mean Strength (MPa) | Weibull Factor | Worked Surface Roughness (µmRa) | Duration (sec.) |
|---|---|---|---|---|
| Excimer Laser Beam Machining | 1380 | 30 | 0.08 | 200 |
| *YAG Laser Beam Machining | 800 | 17 | 6.53 | 20 |
| *Machining | 980 | 12 | 0.12 | 100 |

| | | | | |
|---|---|---|---|---|
| *: comparative examples | | | | |

As obvious from Table 1, it is recognized that the mean strength was increased and the Weibull factor indicating reliability was also increased when surface working was performed with an excimer laser. It is conceivable that strength reduction was suppressed with small occurrence of damages caused by working, due to the surface working employing the excimer laser. In other words, it is conceivable that adhesion layers (oxides expressed in SiₓO_{y}, for example) of melted coagula of ceramics, working defects, surface alteration layers and residual stress were caused and these defects reduced original strength characteristics of the materials in the surface working methods of comparative examples.

It is further recognized that superior working surface accuracy can be obtained according to the surface working employing the KrF excimer laser as compared with the grinding employing the #200 diamond grindstone. Surface roughness values in this case were represented by longitudinal roughness values of the test pieces. In relation to machining, it is known that a grinding direction with respect to a load direction of stress in a bending test influences on strength. As to each of the TRS test pieces, strength was reduced in grinding along the short direction of the test piece as compared with the longitudinal direction particularly in employment of a low count grindstone. This is conceivably because grinding marks become perpendicular to the pull direction in the grinding along the short direction and forward ends of defects coincide with the direction of crack openings when grinding marks or crack surfaces caused by indentation of abrasive grains in grinding are regarded as defects, leading to low strength as the result.

On the other hand, it can be said that no influence is exerted on strength by a work direction in laser beam machining, particularly in excimer laser beam machining, since surface roughness of the working surface is hardly influenced by the work direction.

Then, amounts of removal from sintered surfaces were varied in excimer laser beam machining, to measure strength values, Weibull factors and surface roughness values. The results are shown in Table 2.

**Table 2**

| Amount of Removal | Mean Strength (MPa) | Weibull Factor | Worked Surface Roughness (µmRa) |
|---|---|---|---|
| *1.5µm | 870 | 7.5 | 0.95 |
| 2.5µm | 1380 | 27 | 0.08 |
| 5.0µm | 1370 | 26 | 0.07 |
| 10.0µm | 1380 | 30 | 0.08 |

| | | | |
|---|---|---|---|
| *: comparative example | | | |

In the comparative example having the amount of removal of less than 2 µm, strength and the Weibull factor are reduced. In the inventive samples removing at least 2 µm, on the other hand, it is possible to maintain high strength values while also reducing dispersion thereof since defects on the surface layers are sufficiently removed.

### Example 2

The same test as Example 1 was carried out on commercially available SiC sintered bodies. The results are shown in Table 3.

**Table 3**

| | Mean Strength (MPa) | Weibull Factor | Worked Surface Roughness (µmRa) | Duration (sec.) |
|---|---|---|---|---|
| Excimer Laser Beam Machining | 1200 | 30 | 0.06 | 400 |
| *YAG Laser Beam Machining | 620 | 8 | 7.80 | 30 |
| *Machining | 730 | 6 | 0.02 | 120 |

| | | | | |
|---|---|---|---|---|
| *: comparative examples | | | | |

As obvious from the results of Table 3, it is recognized that the inventive method is superior to other methods in any points of mean strength, Weibull factor and working surface roughness also in the case of SiC sintered bodies, when surface working is performed with employment of an excimer laser.

Further, influences exerted on strength values of the working surfaces by amounts of removal were studied similarly to Example 1. The results are shown in Table 4.

**Table 4**

| Amount of Removal | Mean Strength (MPa) | Weibull Factor | Worked Surface Roughness (µmRa) |
|---|---|---|---|
| *1.5µm | 780 | 10 | 0.87 |
| 2.5µm | 1180 | 28 | 0.06 |
| 5.0µm | 1175 | 30 | 0.07 |
| 10.0µm | 1200 | 30 | 0.06 |

| | | | |
|---|---|---|---|
| *: comparative example | | | |

As shown in Table 4, the strength remained at a low value with the amount of removal of not more than 2 µm in comparative example. When the amount of removal is set to be at least 2 µm, on the other hand, it is possible to obtain a working surface having high reliability with respect to strength.

### Example 3

Rough working was executed on the same silicon nitride sintered bodies as those in Example 1 by an Nd-YAG laser which is infrared light, and a diamond grindstone, while finish working was executed with a KrF excimer laser of ultraviolet light. With respect to prescribed dimensions of 4 mm x 3 mm x 40 mm of each TRS test piece in accordance with JIS R1601, a maximum stress generating surface in a three-point bending test was left unworked while grinding was executed on another surface, to carry out preliminary working in dimensions of 4 mm x 3.1 mm x 40 mm. It was assumed that removal working of 0.1 mm was performed on the test piece subjected to the preliminary working, so that working was made until residual machining allowance reached 10 µm by rough working, and thereafter finish working was executed. A resin bond based grindstone of #200 was employed as a diamond grindstone for the rough working.

As comparative example, finish working was similarly carried out with a diamond grindstone #400 after rough working by grinding.

In the working with the laser, position control of a work table in a vertical direction was performed in order to maintain the distance between an outermost beam-irradiated surface and an objective lens of a laser oscillator optical system constant with respect to progress of working in the depth direction.

The work number for a single working method was set at 15. Table 5 shows mean strength values, Weibull factors and surface roughness values of the test pieces as measured, and duration per test piece.

**Table 5**

| | Mean Strength (MPa) | Weibull Factor | Worked Surface Roughness (µmRa) | Duration (sec.) |
|---|---|---|---|---|
| KrF Excimer | 1380 | 30 | 0.08 | 4500 |
| *YAG | 800 | 17 | 6.53 | 1200 |
| YAG + Excimer | 1310 | 26 | 0.08 | 1700 |
| Grinding + Excimer | 1350 | 27 | 0.07 | 600 |
| *Mechanical Grinding | 980 | 12 | 0.12 | 180 |

| | | | | |
|---|---|---|---|---|
| *: comparative examples | | | | |

As obvious from the results shown in Table 5, the ceramics in which the surfaces of the finally worked shapes were worked with ultraviolet light lasers have strength values and Weibull factors which are at least equivalent to those in conventional mechanical grinding. Surface roughness values of the working surfaces were also substantially at the same degrees as that obtained with the #400 diamond grindstone, and smooth surfaces having high accuracy were obtained.

As to the machining time per test piece, it takes much time in the working with the excimer laser alone as compared with the ordinary grinding. However, it is possible to obtain characteristics equivalent to those obtained by the working with the excimer laser alone and to remarkably reduce the machining time by combining the working with the rough machining as the YAG laser or the grinding using diamond grindstone having high working efficiency.

Then, Tables 6 and 7 show results of working carried out while varying residual machining allowances (finish allowances) in rough working.

**Table 6**

| YAG + Excimer Machining | | | |
|---|---|---|---|
| Finish Allowance | Mean Strength (MPa) | Weibull Factor | Worked Surface Roughness (µmRa) |
| *1.5µm | 750 | 8 | 1.85 |
| 2.5µm | 1300 | 25 | 0.09 |
| 5.0µm | 1320 | 25 | 0.09 |
| 10.0µm | 1310 | 26 | 0.08 |

| | | | |
|---|---|---|---|
| *: comparative example | | | |

**Table 7**

| Grinding + Excimer Machining | | | |
|---|---|---|---|
| Amount of Removal | Mean Strength (MPa) | Weibull Factor | Worked Surface Roughness (µmRa) |
| *1.5µm | 850 | 7 | 0.35 |
| 2.5µm | 1320 | 26 | 0.09 |
| 5.0µm | 1350 | 28 | 0.08 |
| 10.0µm | 1350 | 27 | 0.07 |

| | | | |
|---|---|---|---|
| *: comparative example | | | |

In comparative example in which the thickness removed by the excimer laser was less than 2 µm, the strength and the Weibull factor were at low values since influence by the pre-working could not be completely eliminated. In least 2 µm, on the other hand, it is possible to attain high reliability since working influence layers by pre-working and working defects can be sufficiently eliminated.

Also in that finished with an excimer laser after grinding, it is possible to similarly improve reliability by increasing the finish allowance. This is conceivably because it is possible to eliminate working defects resulting from grinding, which is pre-working, by increasing the finish allowance by the excimer laser.

### Example 4

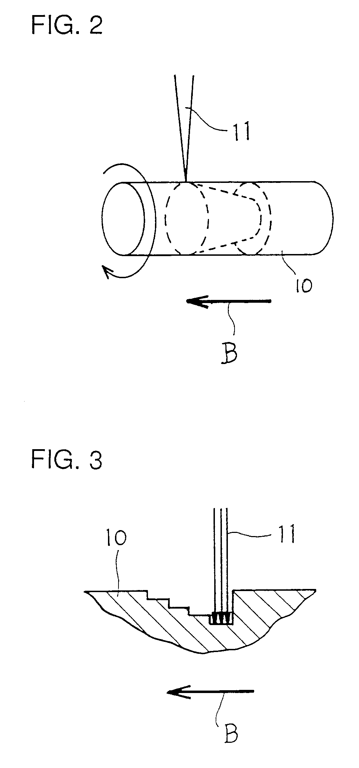

Three-dimensional working was executed in accordance with the inventive method. The execution method is shown in Figs. 2 and 3. In a case of forming a tapered shape, for example, a laser 11 is applied to a worked portion while rotating a workpiece 10 as shown in Fig. 2. Further, a curved surface or an inclined surface was formed by continuously or intermittently moving the workpiece 10 in a direction shown by arrow B. Fig. 3 is an illustrative diagram showing the worked portion in an enlarged manner. In the tapered portion, working in the depth direction is enabled by intermitting the feed in the B direction, and it is possible to change the amount of removal by varying the intermittent time. Thus, a desired tapered shape is formed.

In this Example, the distance between the outermost working surface and an objective lens of an optical system was maintained constant, to make the amount of removal per pulse constant. The outermost surface of the worked product was removed by the excimer laser by at least 2 µm.

As the result of the aforementioned working, it was possible to obtain a part shape having high accuracy in dimensional shape and surface finishing, as well as high reliability against breaking due to no inclusion of working defects in the surface layer.

### Industrial Availability

As hereinabove described, the ceramics sintered body obtained according to the present invention can be advantageously utilized as a wear resistant part or a sliding part having small surface damage portions.

## Claims

1. A surface working method for a ceramics sintered body, irradiating a surface of a prescribed region of a ceramics sintered body with a laser beam having a wavelength of an ultraviolet region thereby removing a surface layer of said prescribed region.

2. A surface working method for a ceramics sintered body in accordance with claim 1, wherein the thickness of said removed surface layer is at least 2 µm.

3. A surface working method for a ceramics sintered body in accordance with claim 1, wherein said laser beam or said ceramics sintered body is continuously or intermittently moved so that said laser beam is applied to overall said prescribed region.

4. A surface working method for a ceramics sintered body in accordance with claim 1, wherein said removed surface layer comprises a sintered surface, a surface after mechanical grinding, or a surface after working with a laser beam having a wavelength of an infrared region.

5. A surface working method for a ceramics sintered body in accordance with claim 1, wherein the distance between an objective lens of a laser oscillator oscillating said laser beam having a wavelength of an ultraviolet region and said ceramics sintered body is adjusted during working for maintaining the distance between said objective lens and a worked surface said ceramics sintered body constant.

6. A surface working method for a ceramics sintered body, performing rough working on a prescribed region of a ceramics sintered body and thereafter irradiating a surface of said roughly worked prescribed region with a laser beam having a wavelength of an ultraviolet region as finish working, thereby removing a surface layer of said prescribed region.

7. A surface working method for a ceramics sintered body in accordance with claim 6, wherein said rough working is mechanical grinding, or working with a laser beam having a wavelength of an infrared region.

8. A surface working method for a ceramics sintered body in accordance with claim 6, wherein the thickness of said surface layer being removed by said laser beam having a wavelength of an ultraviolet region is at least 2 µm.

9. A ceramics sintered body having a prescribed region whose surface layer is removed by irradiation with a laser beam having a wavelength of an ultraviolet region.

10. A ceramics sintered body in accordance with claim 9, wherein a surface of said prescribed region after removal of said surface layer contains no melted coagulum of ceramics.

11. A ceramics sintered body in accordance with claim 9, wherein surface roughness of said prescribed region after removal of said surface layer is not more than 5 µm in center line average height Ra of JIS B0601.

12. A ceramics sintered body in accordance with claim 9, wherein the material for said prescribed region is a silicon nitride based ceramics sintered body, said surface of said prescribed region after removal of said surface layer having three-point bending strength in accordance with JIS R1601 of at least 1000 MPa.
